# EUROPÄISCHE PATENTSCHRIFT

(11) **EP 2 766 137 B1**
(45) Veröffentlichungstag und Bekanntmachung des Hinweises auf die Patenterteilung: **21.06.2017**
(21) Anmeldenummer: 12769679.7
(22) Anmeldetag: 10.10.2012
(51) Int. Cl.: B23B 31/02, B23B 31/117, B23C 5/00, B23C 5/26, B23D 77/00

(54) **WERKZEUGSYSTEM ZUR SPANABHEBENDEN BEARBEITUNG EINES WERKSTÜCKS**
TOOL SYSTEM FOR CHIP REMOVING MACHINING OF A WORKPIECE
SYSTÈME D'OUTIL POUR L'USINAGE D'ENLEVEMENT DE COPEAUX D'UNE PIÈCE

(30) Priorität: 10.10.2011 DE 102011116080
(43) Veröffentlichungstag der Anmeldung: 20.08.2014
(73) Patentinhaber: Hartmetall-Werkzeugfabrik Paul Horn GmbH, 72072 Tübingen (DE)
(72) Erfinder: OETTLE, Matthias, 78661 Wellendingen (DE)
(74) Vertreter: Witte, Weller & Partner Patentanwälte mbB
(86) Internationale Anmeldenummer: PCT/EP2012/070038
(87) Internationale Veröffentlichungsnummer: WO 2013/053743

(56) Entgegenhaltungen:
- DE-B4- 10 326 928
- DE-C1- 4 334 259
- JP-A- 5 277 865

## Beschreibung

Die vorliegende Erfindung betrifft ein Werkzeugsystem zur spanabhebenden Bearbeitung eines Werkstücks sowie einen Schneidkopf und eine Werkzeugkupplung für ein solches Werkzeugsystem.

Werkzeugsysteme dieser Art werden zur Feinbearbeitung von zylindrischen Bohrungen verwendet. Ein solches Werkzeugsystem ist beispielsweise in der DE 103 26 928 B4 beschrieben. Dieses Werkzeugsystem weist einen Halter auf, der an einem Flansch befestigt ist. Des Weiteren ist ein Wechselkopf am werkstückseitigen Ende des Halters mittels einer Spannvorrichtung angebracht.

JP 5 277865 A offenbart ein Schaftfräswerkzeug mit einem Aufspannschaft, in dem eine konische Sacklochbohrung vorgesehen ist, und mit einem Fräskopf, welcher mittels einer Einsatzhülse in die konische Sacklochborung eingesetzt ist. Der Fräskopf ist dabei in einer in der Einsetzhülse vorgesehenen Bohrung festgeklebt. Dieses Dokument zeigt eine Werkzeugkupplung nach dem Oberbegriff des Anspruchs 1 und einen Schneidkopf gemäß dem Oberbegriff von Anspruch 9.

Neben den herkömmlichen, aus Stahl gefertigten Werkzeugsystemen sind auch Leichtbaukonstruktionen aus Leichtmetall bekannt, bei denen die Schneiden mittels eines Fügeverfahrens am Werkzeugkörper befestigt oder mittels Stahlkassetten am Schneidkörper aufgenommen werden.

Der vorliegenden Erfindung liegt die Aufgabe zugrunde, eine alternative Ausgestaltung eines Werkzeugsystem zur spanabhebenden Bearbeitung eines Werkstücks hinsichtlich einer deutlichen Reduzierung des Werkzeuggewichts und des Kippmoments sowie einen alternativen Schneidkopf und eine alternative Werkzeugkupplung des Werkzeugsystem anzugeben.

Ein erster Aspekt der vorliegenden Erfindung betrifft eine Werkzeugkupplung gemäß Anspruch 1 für ein Werkzeugsystem zur spanabhebenden Bearbeitung eines Werkstücks, wobei das Werkzeugsystem einen zylinderförmigen Halteschaft aufweist, der an einer antriebsseitigen Stirnfläche eine Antriebsaufnahme mit Abstützflächen aufweist, wobei:
- die Werkzeugkupplung eine zur Antriebsaufnahme korrespondierende Kupplungsnabe aufweist,
- die Kupplungsnabe mehrere, radial hervorstehende Erhöhungsbereiche aufweist, auf denen sich Anlageflächen befinden und zwischen denen sich Zwischenräume befinden,
- die Erhöhungsbereiche sowohl in Umfangsrichtung als auch längs der Kupplungsnabe verteilt angeordnet sind,
- die Anlageflächen an Abstützflächen der Antriebsaufnahme des Halteschafts anliegen,
- die Antriebsaufnahme des Halteschafts mit der Kupplungsnabe der Werkzeugkupplung mittels eines in den Zwischenräumen zwischen den Erhöhungsbereichen eingebrachten Fügematerials fest verbunden ist.

Ein weiterer Aspekt der vorliegenden Erfindung betrifft ein Werkzeugsystem zur spanabhebenden Bearbeitung eines Werkstücks mit:
- einem zylinderförmigen Halteschaft, der an einer werkstückseitigen Stirnfläche eine Schneidkopfaufnahme und an einer antriebseitigen Stirnfläche eine Antriebsaufnahme aufweist,
- einem Schneidkopf mit zumindest einer Schneide und einer zur Schneidkopfaufnahme des Halteschafts korrespondierenden Schneidkopfnabe und
- einer Werkzeugkupplung nach Anspruch 1.

Ein weiterer Aspekt der vorliegenden Erfindung betrifft einen Schneidkopf gemäß Anspruch 9 für ein Werkzeugsystem, zur spanabhebenden Bearbeitung eines Werkstücks, wobei das Werkzeugsystem einen zylinderförmigen Halteschaft aufweist, der an einer werkstückseitigen Stirnfläche eine Schneidkopfaufnahme mit Abstützflächen aufweist, wobei:
- der Schneidkopf zumindest eine Schneide aufweist,
- der Schneidkopf eine zur Schneidkopfaufnahme korrespondierende Schneidkopfnabe aufweist,
- die Schneidkopfnabe mehrere radial hervorstehende Erhöhungsbereiche aufweist, auf denen sich Anlageflächen befinden und zwischen denen sich Zwischenräume befinden,
- die Erhöhungsbereiche sowohl in Umfangsrichtung als auch längs der Schneidkopfnabe verteilt angeordnet sind,
- die Anlageflächen an Abstützflächen der Schneidkopfaufnahme des Halteschafts anliegen,
- die Schneidkopfaufnahme mit der Schneidkopfnabe mittels eines in den Zwischenräumen zwischen den Erhöhungsbereichen eingebrachten Fügematerials fest verbunden ist.

Ein weiterer Aspekt der vorliegenden Erfindung betrifft ein Werkzeugsystem zur spanabhebenden Bearbeitung eines Werkstücks mit:
- einem zylinderförmigen Halteschaft, der an einer werkstückseitigen Stirnfläche eine Schneidkopfaufnahme und an einer antriebseitigen Stirnfläche eine Antriebsaufnahme aufweist,
- einem Schneidkopf nach Anspruch 9 und
- einer Werkzeugkupplung mit einer Werkzeugschnittstelle und einer zur Antriebsaufnahme korrespondierenden Kupplungsnabe.

Anders als die aus dem Stand der Technik bekannten Werkzeugsysteme weist das erfindungsgemäße Werkzeugsystem einen zylinderförmigen halteschaft, einen Schneidkopf und eine Werkzeugkupplung auf, die fest miteinander verbindbar sind. Durch eine geeignete Wahl des Werkstoffs für den zylinderförmigen Halteschaft lässt sich in diesem Zusammenhang eine deutliche Verringerung des Werkzeugsystemgewichts und auch des Kippmoments erreichen. Dadurch lässt sich selbst für große Auskraglängen des Werkzeugsystem eine hohe Positioniergenauigkeit des Schneidkopfs gegenüber der Werkzeugkupplung gewährleisten.

Ferner lässt sich durch die Verringerung des Kippmoments des Werkzeugsystem ein höheres Maß an Präzision für das Bohrloch erreichen, was mit der damit verbundenen Verringerung der Unwucht des Werkzeugsystem zusammenhängt.

In einer bevorzugten Ausgestaltung ist vorgesehen, dass zumindest ein Erhöhungsbereich in Umfangsrichtung längs der Kupplungsnabe und/oder der Schneidkopfnabe durchgängig ausgebildet ist.

Diese einfache Form der Ausgestaltung bietet eine sehr kostengünstige und einfache Möglichkeit, diese Erhöhungsbereiche auf der Kupplungsnabe und/oder der Schneidkopfnabe zu realisieren. Eine der wohl einfachsten Realisierungsformen ist ein einfaches Gewinde mit im Prinzip beliebigem Gangabstand, das in die Kupplungsnabe und/oder die Schneidkopfnabe geschnitten wird.

In einer weiteren Ausgestaltung ist vorgesehen, dass zumindest zwei Erhöhungsbereiche in Umfangsrichtung der Kupplungsnabe und/oder der Schneidkopfnabe durchgängig ausgebildet sind, wobei der zumindest erste Erhöhungsbereich relativ zum zumindest letzten Erhöhungsbereich längs der Kupplungsnabe und/oder der Schneidkopfnabe beabstandet angeordnet ist.

Diese Anordnung der Erhöhungsbereiche gewährleistet eine sichere und präzise Aufnahme der Kupplungsnabe und/oder der Schneidkopfnabe in die korrespondierende Antriebsaufnahme und/oder Schneidkopfaufnahme des Halteschafts. Ein Verkippen der Naben relativ zur Aufnahme des Halteschafts wird durch die radial durchgängige Anordnung der Erhöhungsbereiche und der axialen Beabstandung der Erhöhungsbereiche verhindert. Ferner lässt sich durch die Beabstandung der Erhöhungsbereiche längs der Kupplungsnabe und/oder der Schneidkopfnabe die Größe des Zwischenraums und damit die Größe der gewünschten Fügefläche zwischen der Kupplungsnabe und/oder der Schneidkopfnabe mit der Antriebsaufnahme und/oder der Schneidkopfaufnahme festlegen.

In einer weiteren Ausgestaltung ist vorgesehen, dass zumindest drei Erhöhungsbereiche in Umfangsrichtung der Kupplungsnabe und/oder der Schneidkopfnabe durchgängig ausgebildet sind, wobei zumindest ein, längs der Kupplungsnabe und/oder der Schneidkopfnabe zwischen dem ersten Erhöhungsbereich und dem letzten Erhöhungsbereich angeordneter, mittlerer Erhöhungsbereich zumindest einen Bereich geringerer Höhe aufweist.

Diese Anordnung der Erhöhungsbereiche bietet ein hohes Maß an Genauigkeit bei der Ausrichtung der Kupplungsnabe und/oder der Schneidkopfnabe relativ zur Antriebsaufnahme und/oder der Schneidkopfaufnahme des Halteschafts. Ferner wird durch den Bereich geringerer Höhe am mittleren der beiden Erhöhungsbereiche ein möglicher Durchfluss für das in die Zwischenräume eingebrachte Fügematerial gewährleistet, was zu einer gleichmäßigen Verteilung des Fügematerials in den Zwischenräumen und damit zu einer ausgeprägten Fügefläche zwischen der Kupplungsnabe und/oder der Schneidkopfnabe mit der Antriebsaufnahme und/oder der Schneidkopfaufnahme führt.

In einer weiteren Ausgestaltung ist vorgesehen, dass sich der erste Erhöhungsbereich und der letzte Erhöhungsbereich bevorzugt an das werkstückseitige Ende und an das antriebsseitige Ende der Kupplungsnabe und/oder Schneidkopfnabe anschließt.

Diese Anordnung der Erhöhungsbereiche bietet den Vorteil, dass die Zwischenräume nach außen durch die Erhöhungsbereiche abgeschlossen sind. Demzufolge ist damit auch ein Austritt des in die Zwischenräume eingebrachten Fügematerials durch die Erhöhungsbereiche unterbunden.

In einer weiteren Ausgestaltung ist vorgesehen, dass die Erhöhungsbereiche ringförmig ausgebildet sind.

Diese ringförmige Ausgestaltung bietet eine sehr einfach zu realisierende und kostengünstige Möglichkeit, die Erhöhungsbereiche auf der Kupplungsnabe und/oder der Schneidkopfnabe mit geringem Aufwand bereitzustellen.

In einer weiteren Ausgestaltung ist vorgesehen, dass die Erhöhungsbereiche längs der Kupplungsnabe und/oder der Antriebsnabe durchgängig ausgebildet sind, wobei diese Erhöhungsbereiche, insbesondere mindestens vier längs der Kupplungsnabe und/oder der Anmeldung verlaufende Stege, in Umfangsrichtung der Kupplungsnabe und/oder der Anmeldung durch Zwischenräume beabstandet sind.

Durch eine Ausgestaltung von zumindest vier längs der Kupplungsnabe und/oder der Schneidkopfnabe verlaufenden Stegen ist eine präzise Ausrichtung der Schneidkopfnabe und/oder der Kupplungsnabe relativ zur Antriebsaufnahme und/oder der Schneidkopfaufnahme des Halteschafts gewährleistet.

Neben den bereits diskutierten Ausgestaltungsformen der Erhöhungsbereiche bietet auch diese Ausgestaltung die Möglichkeit, die Verbindung zwischen der Kupplungsnabe und/oder der Antriebsnabe mit der Antriebsaufnahme und/oder der Schneidkopfaufnahme des Halteschafts je nach den gegebenen Erfordernissen für das Werkzeugsystem anzupassen.

In einer weiteren Ausgestaltung ist vorgesehen, dass das Werkzeugsystem ein in den Halteschaft einführbares und längs des Halteschafts verlaufendes Kühlmittelrohr aufweist, wobei das Kühlmittelrohr zumindest ein werkstückseitiges Anschlussende aufweist, das mit einem an einer antriebsseitigen Stirnseite des Schneidkopfs angeordneten ersten Anschlusselement verbindbar ist und zumindest ein antriebsseitiges Anschlussende aufweist, das mit einem an einer werkstückseitigen Stirnseite der Werkzeugkupplung angeordneten zweiten Anschlusselement verbindbar ist. Das Kühlmittelrohr wird mit den Anschlusselementen des Schneidkopfs bzw. der Werkzeugkupplung bevorzugt verklebt oder verpresst.

Diese Form der Verbindung bietet eine einfache, dichte und kostengünstige Variante, die Anschlusselemente des Schneidkopfs und der Werkzeugkupplung mit den Anschlussenden des Kühlmittelrohrs zu verbinden. Die Führung des Kühlmittelrohrs innerhalb des Halteschafts und die Ausgestaltung der Verbindung zwischen den Anschlussenden des Kühlmittelrohrs mit den Anschlusselementen der Werkzeugkupplung und des Schneidkopfs gewährleistet grundsätzlich eine Anpassung der Länge des Kühlmittelrohrs an die Länge des Halteschafts.

In einer weiteren Ausgestaltung ist vorgesehen, dass der Halteschaft aus einem Verbundwerkstoff, insbesondere CFK oder GFK oder aus einem Leichtmetall oder einer Leichtmetalllegierung, insbesondere Aluminium, Magnesium oder Titan, hergestellt ist. Die Anforderungen für die für den Halteschaft verwendbaren Materialien ergeben sich direkt aus den Anforderungen für das gesamte Werkzeugsystem. Demnach muss das für den Halteschaft verwendete Material eine hohe Steifigkeit und eine geringe Wärmeausdehnung aufweisen. Ferner muss das verwendete Material eine zu Stahl vergleichbare Festigkeit, jedoch ein deutlich geringeres Gewicht aufweisen, was beispielsweise auf die Wahl der genannten Materialien bzw. Materialkombinationen führt. Es versteht sich, dass die Wahl der Materialien für den Halteschaft, die Ausgestaltung der Werkzeugkupplung und/oder des Schneidkopfs sowie deren Verbindung mit dem Schaft sich nach den Anforderungen des Werkzeugsystems und damit nach dem gewünschten Einsatzbereich richtet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine perspektivische Darstellung eines ersten Ausführungsbeispiels des erfindungsgemäßen Werkzeugsystems in einer Übersichtsdarstellung,
- Figur 2: eine perspektivische Darstellung der ersten Ausführungsform mit detaillierter Darstellung der beiden Enden des Werkzeugsystems,
- Figur 3: eine Vorderansicht und eine Schnittdarstellung einer Ausgestaltungsform der erfindungsgemäßen Werkzeugkupplung,
- Figur 4: jeweils eine Schnittdarstellung von zwei unterschiedlichen Ausführungsformen der erfindungsgemäßen Werkzeugkupplung und eine weitere Ausführungsform der erfindungsgemäßen Werkzeugkupplung in Vorderansicht und Schnittdarstellung, und
- Figur 5: jeweils eine Vorderansicht und Schnittdarstellung einer Ausgestaltungsform des erfindungsgemäßen Schneidkopfs.

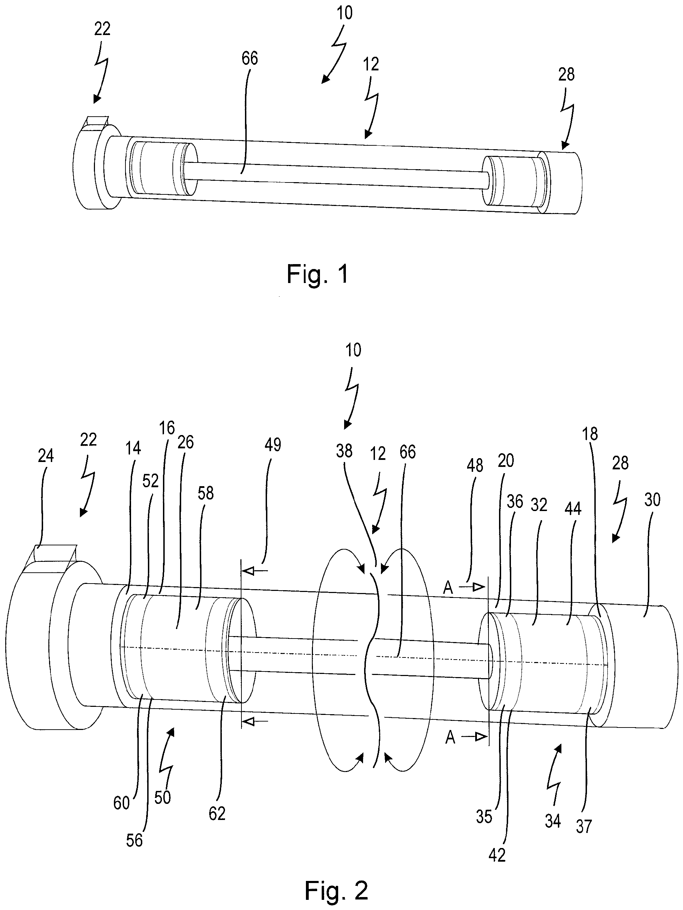

Fig. 1 zeigt eine perspektivische Darstellung einer ersten Ausführungsform eines erfindungsgemäßen Werkzeugsystems 10 umfassend einen Halteschaft 12, einen Schneidkopf 22, eine Werkzeugkupplung 28 und ein Kühlmittelrohr 66. Bei dieser Ausführungsform besteht der Schneidkopf 22, die Werkzeugkupplung 28 und das Kühlmittelrohr 66 aus Stahl, wohingegen der Halteschaft 12 aus einem Verbundwerkstoff, insbesondere CFK oder GFK, gefertigt ist.

Der Halteschaft 12 weist an einer werkstückseitigen Stirnfläche 14 eine Schneidkopfaufnahme 16 und an einer antriebsseitigen Stirnfläche 18 eine Antriebsaufnahme 20 auf. Am Werkzeugsystem 10 befindet sich werkstückseitig ein Schneidkopf 22 mit zumindest einer Schneide 24 und einer zur Schneidkopfaufnahme 16 des Halteschafts 12 korrespondierende Schneidkopfnabe 26, die in die Schneidkopfaufnahme 16 eingeführt ist. Am Werkzeugsystem 10 befindet sich antriebsseitig eine Werkzeugkupplung 28 mit einer Werkzeugschnittstelle 30 und einer zur Antriebsaufnahme 20 korrespondierenden Kupplungsnabe 32, die in die Antriebsaufnahme 20 eingeführt ist.

Die Kupplungsnabe 32 weist Erhöhungsbereiche 34 mit Anlageflächen 36 auf, wobei die Erhöhungsbereiche 34, wie in Fig. 1 bis 3 dargestellt, durch längs der Umfangsrichtung 38 und entlang der Kupplungsnabe 32 ausgebildete kreisförmige Ringe ausgestaltet sind. Diese Ringe sind ferner längs der Kupplungsnabe 32 verteilt angeordnet, wobei die Anlageflächen 36 an den Abstützflächen 42 der Antriebsaufnahme 20 des Halteschafts anliegen. Dies führt dazu, dass die Kupplungsnabe 32 und damit die Werkzeugkupplung 28 längs des Halteschafts 12 zentriert ausgerichtet ist.

Nachdem die Werkzeugkupplung 28 relativ zum Halteschaft 12 ausgerichtet ist, werden die Zwischenräume 44 zwischen den Erhöhungsbereichen 34 auf der Kupplungsnabe 32 mittels eines Fügematerials 46 aufgefüllt, wobei das Fügematerial durch eine Einfüllöffnung 47 eingefüllt wird und durch eine Austrittsöffnung 49 wieder heraustritt. Wenn möglich, werden die Zwischenräume 44 restlos mit dem Fügematerial 46 aufgefüllt. Das Fügematerial 46 stellt somit eine feste Verbindung zwischen der Kupplungsnabe 32 und der Antriebsaufnahme 20 und damit eine feste Verbindung zwischen der Werkzeugkupplung 28 und dem Halteschaft 12 her.

Durch die Anordnung eines ersten Erhöhungsbereichs 35 und eines letzten Erhöhungsbereichs 37 am antriebsseitigen Ende 47 und am werkstückseitigen Ende 43 der Kupplungsnabe 32 wird in dieser bevorzugten Ausführungsform, dargestellt in Fig. 1 bis 3, Fig. 4b und Fig. 5, verhindert, dass das in die Zwischenräume 44 eingebrachte Fügematerial 46 die Zwischenräume 44 verlässt und in den Halteschaft 12 und/oder aus dem Halteschaft 12 nach außen entweichen kann. Somit ist durch diese Anordnung der Erhöhungsbereiche 34 in Verbindung mit der Einfüll- und Auslassöffnung 47, 49 eine gleichmäßige Ausfüllung der Zwischenräume 44 mittels des Fügematerials 46 gewährleistet.

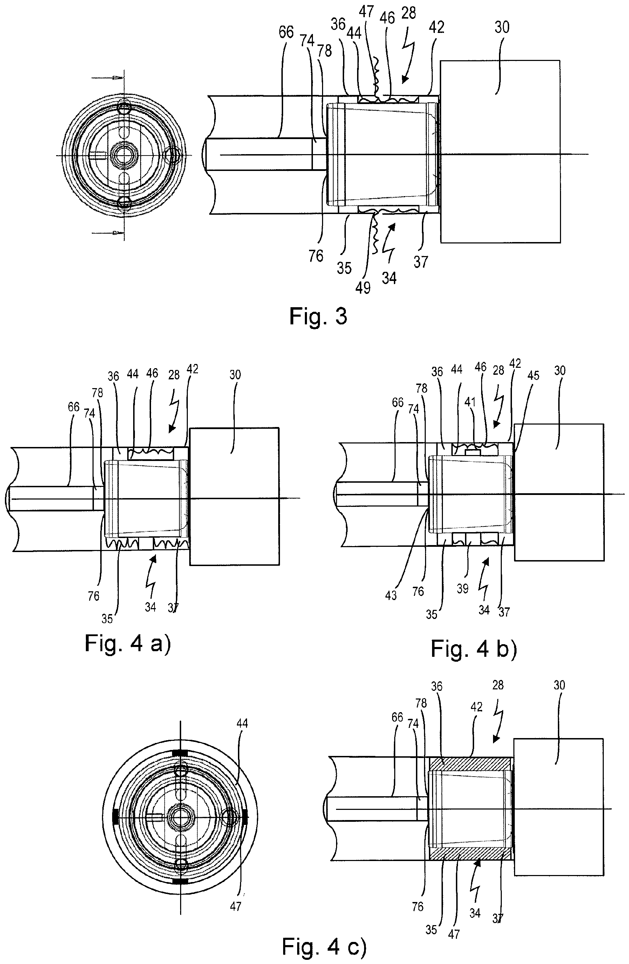

Eine weitere bevorzugte Ausführungsform, die in Fig. 4a dargestellt ist, zeigt eine spiralförmige Anordnung der Erhöhungsbereiche 34, wobei sich die Erhöhungsbereiche 34 entlang der Kupplungsnabe 32 erstrecken.

Eine weitere bevorzugte und in Fig. 4b dargestellte Ausführungsform zeigt die Anordnung von drei Erhöhungsbereichen. In Anlehnung an Fig. 3 befindet sich ein erster Erhöhungsbereich 36 und ein zweiter Erhöhungsbereich 37 am werkstückseitigen Ende 43 und am antriebsseitigen Ende 45 der Kupplungsnabe 32. Zwischen den beiden Erhöhungsbereichen 35, 37 befindet sich ein mittlerer Erhöhungsbereich 39, der zumindest in einem Bereich 41 eine geringere Höhe aufweist. Dieser Bereich 41 geringerer Höhe ist für den Durchfluss des Fügematerials 46 notwendig, um eine flächige Verbindung des Fügematerials zwischen der Kupplungsnabe 32 und der Antriebsaufnahme 20 zu gewährleisten. Ferner ist durch die Anordnung des ersten Erhöhungsbereichs 35 relativ zum letzten Erhöhungsbereich 37 der Austritt des Fügematerials 46 aus dem Zwischenraum 44 unterbunden.

In Fig. 4c ist eine weitere bevorzugte Ausführungsform dargestellt, bei der die Erhöhungsbereiche 34 längs der Kupplungsnabe 32 durchgängig ausgebildet sind. Diese sind in bevorzugter Weise in Form von mindestens vier längs der Kupplungsnabe 32 verlaufender und sich diametral gegenüberliegender Stege 47 ausgebildet. Die zum Ausfüllen mit dem Fügematerial 46 benötigten Zwischenräume 44 ergeben sich in radialer Richtung zwischen den mindestens vier Erhöhungsbereichen 34.

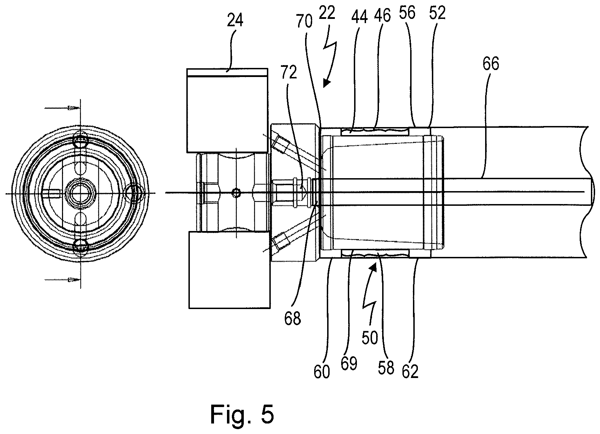

In Fig. 5 ist ein werkstückseitiger Teil des Halteschafts 12 abgebildet. Am werkstückseitigen Ende des Halteschafts 12 befindet sich eine Stirnfläche 14 mit einer im Halteschaft 12 verlaufenden Schneidkopfaufnahme 16, die die zur Schneidkopfaufnahme 16 korrespondierende Schneidkopfnabe 26 aufnimmt. Der Schneidkopf 22 weist in Umfangsrichtung 38 zumindest eine Schneide 12 auf, wobei bevorzugt mehrere symmetrisch am Schneidkopf 22 angebrachte Schneiden 24 Verwendung finden. Die Schneidkopfnabe 26 weist Erhöhungsbereiche 50 mit Anlageflächen 52 auf, wobei die Erhöhungsbereiche 50 in Form von sich in Umfangsrichtung 38 durchgängig erstreckenden und längs der Schneidkopfnabe 26 ausgedehnten Ringen ausgebildet sind.

Durch das Einbringen der Schneidkopfnabe 26 in die Schneidkopfaufnahme 16 des Halteschafts 12 liegen die Anlageflächen 52 der Erhöhungsbereiche 50 an den Abstützflächen 56 der Schneidkopfaufnahme 16 fest an. Die Verbindung zwischen den Anlageflächen 52 und den Abstützflächen 56 gewährleistet, dass die Schneidkopfnabe 26 relativ zum Halteschaft 12 zentriert ausgerichtet ist.

In Anlehnung an Fig. 1 bis 4 werden die sich bildenden Zwischenräume 58 zwischen den Erhöhungsbereichen 50 durch ein in die Zwischenräume 58 eingebrachtes Fügematerial 46 aufgefüllt. Das Fügematerial stellt hiermit eine feste Verbindung zwischen der Schneidkopfnabe 26 und der Schneidkopfaufnahme 16 und damit zwischen dem Schneidkopf 22 und dem Halteschaft 12 her.

In Anlehnung an die Beschreibungen in Fig. 4a bis c sind für die Schneidkopfnabe 26 Ausführungsformen der Erhöhungsbereiche 50 in Form einer spiralförmigen Ausgestaltung der Erhöhungsbereiche 50, einer Ausgestaltung mit einem ersten Erhöhungsbereich 60 und einem letzten Erhöhungsbereich 62 angenommen, die sich am werkstückseitigen Ende 65 und am antriebsseitigen Ende 67 des Schneidkopfs 26 befinden.

Eine weitere Ausführungsform ist gegeben durch einen optionalen mittleren Erhöhungsbereich 61, der zwischen dem zumindest ersten Erhöhungsbereich 60 und dem zumindest letzten Erhöhungsbereich 62 angeordnet ist. Der mittlere Erhöhungsbereich 61 weist ebenfalls zumindest einen Bereich 63 geringerer Höhe auf. Dieser Bereich 63 gewährleistet eine gleichmäßige Verteilung des Fügematerials 46 im Zwischenraum 44 zwischen der Schneidkopfnabe 26 und der Schneidkopfaufnahme 60.

Eine weitere Ausführungsform ist gegeben in Anlehnung an Fig. 4c, wobei die Erhöhungsbereiche 50 längs der Schneidkopfnabe 62 durchgängig ausgebildet sind. Diese sind in bevorzugter Weise in Form von mindestens vier längs der Schneidkopfnabe 62 vorhandener und sich diametral gegenüberliegender Stege 69 ausgebildet. Die zum Ausfüllen mit Fügematerial 46 benötigten Zwischenräume 58 ergeben sich in radialer Richtung zwischen den mindestens vier Erhöhungsbereichen 50.

Ferner weist das in Abbildungen 1 bis 5 dargestellte Werkzeugsystem 10 ein in den Halteschaft 12 einführbares und längs des Halteschafts 12 verlaufendes Kühlmittelrohr 66 auf. Das Kühlmittelrohr weist ein werkstückseitiges Anschlussende 68 auf, das mit einem an einer antriebsseitigen Stirnseite 70 des Schneidkopfs angeordneten Anschlusselement 72 verbunden ist. Ferner weist das Kühlmittelrohr ein antriebsseitiges Anschlussende 74 auf, das mit einem an der werkstückseitigen Stirnseite 76 der Werkzeugkupplung 28 angeordneten zweiten Anschlusselement 78 verbunden ist. Die Anschlussenden 68, 74 des Kühlmittelrohrs 66 werden in einer weiteren bevorzugten Ausgestaltung mit den Anschlusselementen 62, 78 entweder verklebt oder verpresst.

Die Verbindung aus Schneidkopf, Werkzeugkupplung und Halteschaft stellt ein einfach herzustellendes Werkzeugsystem hoher Präzision und sehr geringen Gewichts dar, mit dem sich insbesondere Bohrungen auch mit großen Auskraglängen mit hoher Genauigkeit bearbeiten lassen. Ferner ist durch die Materialbeschaffenheit des Halteschafts und den hochgenauen Verbindungen zum Schneidkopf und zur Werkzeugkupplung eine hohe Positioniergenauigkeit und Steifigkeit gewährleistet.

## Patentansprüche

1. Werkzeugkupplung für ein Werkzeugsystem (10) zur spanabhebenden Bearbeitung eines Werkstücks, wobei das Werkzeugsystem (10) einen zylinderförmigen Halteschaft (12) aufweist, der an einer antriebseitigen Stirnfläche (18) eine Antriebsaufnahme (20) mit Abstützflächen (42) aufweist, wobei die Werkzeugkupplung (28) eine zur Antriebsaufnahme (20) korrespondierende Kupplungsnabe (32) aufweist,
**dadurch gekennzeichnet, dass** die Kupplungsnabe (32) mehrere, radial hervorstehende Erhöhungsbereiche (34) aufweist, auf denen sich Anlageflächen (36) befinden und zwischen denen sich Zwischenräume (44) befinden, dass die Erhöhungsbereiche (34) sowohl in Umfangsrichtung (38) als auch längs der Kupplungsnabe (32) verteilt angeordnet sind, dass die Anlageflächen (36) an Abstützflächen (42) der Antriebsaufnahme (20) des Halteschafts (12) anliegen, und dass die Antriebsaufnahme (20) des Halteschafts (12) mit der Kupplungsnabe (32) der Werkzeugkupplung (28) mittels eines in den Zwischenräumen (44) zwischen den Erhöhungsbereichen (34) eingebrachten Fügematerials (46) fest verbunden ist.

2. Werkzeugkupplung nach Anspruch 1, **dadurch gekennzeichnet, dass** zumindest einer der Erhöhungsbereiche (34) in Umfangsrichtung (38) und längs der Kupplungsnabe (32) durchgängig ausgebildet ist.

3. Werkzeugkupplung nach Anspruch 1 oder 2, **dadurch gekennzeichnet, dass** zumindest zwei Erhöhungsbereiche (34) in Umfangsrichtung (38) der Kupplungsnabe (32) durchgängig ausgebildet sind, wobei der zumindest erste Erhöhungsbereiche (35) relativ zum zumindest letzten Erhöhungsbereich (37) längs der Kupplungsnabe (32) beabstandet angeordnet ist.

4. Werkzeugkupplung nach einem der vorstehenden Ansprüche, **dadurch gekennzeichnet, dass** zumindest drei Erhöhungsbereiche (34) in Umfangsrichtung (38) der Kupplungsnabe (32) durchgängig ausgebildet sind, wobei zumindest ein, längs der Kupplungsnabe (32) zwischen dem ersten Erhöhungsbereich (35) und dem letzten Erhöhungsbereich (37) angeordneter, mittlere Erhöhungsbereich (39) zumindest einen Bereich (41) geringerer Höhe aufweist.

5. Werkzeugkupplung nach einem der vorstehenden Ansprüche, **dadurch gekennzeichnet, dass** sich der erste Erhöhungsbereich (35) und der letzte Erhöhungsbereich (37) bevorzugt an das werkstückseitige Ende (43) und an das antriebsseitige Ende (45) der Kupplungsnabe (32) abschließt.

6. Werkzeugkupplung nach einem der vorstehenden Ansprüche, **dadurch gekennzeichnet, dass** die Erhöhungsbereiche (34) ringförmig ausgebildet sind.

7. Werkzeugkupplung nach einem der vorstehenden Ansprüche, **dadurch gekennzeichnet, dass** die Erhöhungsbereiche (34) längs der Kupplungsnabe (32) durchgängig ausgebildet sind, wobei diese Erhöhungsbereiche (34), insbesondere mindestens vier längs der Kupplungsnabe (32) verlaufende Stege (47), in Umfangsrichtung (38) der Kupplungsnabe (32) durch Zwischenräume (44) beabstandet sind.

8. Werkzeugsystem zur spanabhebenden Bearbeitung eines Werkstücks mit:
- einem zylinderförmigen Halteschaft (12), der an einer werkstückseitigen Stirnfläche (14) eine Schneidkopfaufnahme (16) und an einer antriebseitigen Stirnfläche (18) eine Antriebsaufnahme (20) aufweist,
- einem Schneidkopf (22) mit zumindest einer Schneide (24) und einer zur Schneidkopfaufnahme (16) des Halteschafts (12) korrespondierenden Schneidkopfnabe (26) und
- einer Werkzeugkupplung (28) nach Anspruch 1.

9. Schneidkopf für ein Werkzeugsystem zur spanabhebenden Bearbeitung eines Werkstücks, wobei das Werkzeugsystem (10) einen zylinderförmigen Halteschaft (12) aufweist, der an einer werkstückseitigen Stirnfläche (14) eine Schneidkopfaufnahme (16) mit Abstützflächen (56) aufweist, wobei der Schneidkopf (22) zumindest eine Schneide (24) aufweist, und wobei der Schneidkopf (22) eine zur Schneidkopfanfnahme (16) korrespondierende Schneidkopfnabe (26) aufweist,
**dadurch gekennzeichnet, dass** die Schneidkopfnabe mehrere, radial hervorstehende Erhöhungsbereiche (50) aufweist, auf denen sich Anlageflächen (52) befinden und zwischen denen sich Zwischenräume (58) befinden, dass die Erhöhungsbereiche (50) sowohl in Umfangsrichtung (38) als auch längs der Schneidkopfnabe (26) verteilt angeordnet sind, dass die Anlageflächen (52) an Abstützflächen (56) der Schneidkopfaufnahme (16) des Halteschafts (12) anliegen, und dass die Schneidkopfaufnahme (16) mit der Schneidkopfnabe (26) mittels eines in den Zwischenräumen (58) zwischen den Erhöhungsbereichen (50) eingebrachten Fügematerials (46) fest verbunden ist.

10. Schneidkopf nach Anspruch 9, **dadurch gekennzeichnet, dass** zumindest einer der Erhöhungsbereiche (50) in Umfangsrichtung (38) und längs der Schneidkopfnabe (26) durchgängig ausgebildet ist.

11. Schneidkopf nach Anspruch 9, **dadurch gekennzeichnet, dass** zumindest zwei Erhöhungsbereiche (50) in Umfangsrichtung (38) der Schneidkopfnabe (26) durchgängig ausgebildet sind, wobei ein zumindest erster Erhöhungsbereich (60) relativ zu einem zumindest zweiten Erhöhungsbereich (62) längs der Schneidkopfnabe (26) beabstandet angeordnet ist.

12. Schneidkopf nach Anspruch 9, **dadurch gekennzeichnet, dass** zumindest drei Erhöhungsbereiche (50) in Umfangsrichtung (38) der Schneidkopfnabe (26) durchgängig ausgebildet sind, wobei zumindest ein, längs der Schneidkopfnabe (26) zwischen dem zumindest ersten Erhöhungsbereich (60) und dem letzten Erhöhungsbereich (62) angeordneter, mittlerer Erhöhungsbereich (61) zumindest einen Bereich (63) geringerer Höhe aufweist.

13. Schneidkopf nach Anspruch 12, **dadurch gekennzeichnet, dass** sich der erste Erhöhungsbereich (60) und der letzte Erhöhungsbereich (62) bevorzugt an das werkstückseitige Ende (65) und an das antriebsseitige Ende (67) der Schneidkopfnabe (26) anschließt

14. Schneidkopf nach einem der Ansprüche 9 bis 13, **dadurch gekennzeichnet, dass** die Erhöhungsbereiche (50) ringförmig ausgebildet sind, und/oder dass die Erhöhungsbereiche (50) längs der Schneidkopfnabe (26) durchgängig ausgebildet sind, wobei diese Erhöhungsbereiche (50), insbesondere mindestens vier längs der Schneidkopfnabe (26) verlaufende Stege (47), in Umfangsrichtung (38) der Schneidkopfnabe (26) durch Zwischenräume (69) beabstandet sind.

15. Werkzeugsystem zur spanabhebenden Bearbeitung eines Werkstücks mit:
- einem zylinderförmigen Halteschafts (12), der an einer werkstückseitigen Stirnfläche (14) eine Schneidkopfaufnahme (16) und an einer mantriebseitigen Stirnfläche (18) eine Antriebsaufnahme (20) aufweist,
- einem Schneidkopf (22) nach Anspruch 9 und
- einer Werkzeugkupplung (28) mit einer Werkzeugschnittstelle (30) und einer zur Antriebsaufnahme (20) korrespondierenden Kupplungsnabe (32).

## Claims

1. Tool coupling for a tool system (10) for cutting machining of a workpiece, the tool system (10) having a cylindrical holding shank (12) which has a drive fixture (20) with supporting faces (42) on a drive-side end face (18) wherein the tool coupling (28) comprises a coupling hub (32) matching with the drive fixture (20),
**characterized in that** the coupling hub (32) comprises a plurality of radially protruding elevated regions (34) on which bearing faces (36) are arranged and between which interspaces (44) are arranged, **in that** the elevated regions (34) are arranged so as to be distributed both in the circumferential direction (38) and along the coupling hub (32), **in that** the bearing faces (36) abut against supporting faces (42) of the drive fixture (20) of the holding shank (12), and **in that** the drive fixture (20) of the holding shank (12) is firmly connected to the coupling hub (32) of the tool coupling (28) by means of a joining material (46) introduced into the interspaces (44) between the elevated regions (34).

2. Tool coupling as claimed in claim 1, **characterized in that** at least one elevated region (34) is formed continuously in the circumferential direction (38) and along the coupling hub (32).

3. Tool coupling as claimed in claim 1 or 2, **characterized in that** at least two elevated regions (34) are formed continuously in the circumferential direction (38) of the coupling hub (32), the at least first elevated region (35) being arranged so as to be spaced apart in relation to the at least last elevated region (37) along the coupling hub (32).

4. Tool coupling as claimed in one of the preceding claims, **characterized in that** at least three elevated regions (34) are formed continuously in the circumferential direction (38) of the coupling hub (32), at least one middle elevated region (39), arranged along the coupling hub (32) between the first elevated region (35) and the last elevated region (37), having at least one region (41) of lower height.

5. Tool coupling as claimed in one of the preceding claims, **characterized in that** the first elevated region (35) and the last elevated region (37) are preferably contiguous respectively to the workpiece-side end (43) and to the drive-side end (45) of the coupling hub (32).

6. Tool coupling as claimed in one of the preceding claims, **characterized in that** the elevated regions (34) are of ring-shaped design.

7. Tool coupling as claimed in one of the preceding claims, **characterized in that** the elevated regions (34) are formed continuously along the coupling hub (32), these elevated regions (34), in particular at least four webs (47) running along the coupling hub (32), being spaced apart in the circumferential direction (38) of the coupling hub (32) by interspaces (44).

8. Tool system for the cutting machining of a workpiece, with:
- a cylindrical holding shank (12) which has a cutting head fixture (16) on a workpiece-side end face (14) and a drive fixture (20) on a drive-side end face (18),
- a cutting head (22) with at least one cutting edge (24) and with a cutting head hub (26) matching with the cutting head fixture (16) of the holding shank (12), and
- a tool coupling (28) as claimed in claim 1.

9. Cutting head for a tool system for cutting machining of a workpiece, the tool system (10) having a cylindrical holding shank (12) which has a cutting head fixture (16) with supporting faces (56) on a workpiece-side end face (14), wherein the cutting head (22) comprises at least one cutting edge (24), and wherein the cutting head (22) comprises a cutting head hub (26) matching with the cutting head fixture (16),
**characterized in that** the cutting head hub comprises a plurality of radially protruding elevated regions (50) on which bearing faces (52) are arranged and between which interspaces (58) are arranged, **in that** the elevated regions (50) are arranged so as to be distributed both in the circumferential direction (38) and along the cutting head hub (26), **in that** the bearing faces (52) abut against supporting faces (56) of the cutting head fixture (16) of the holding shank (12), and **in that** the cutting head fixture (16) is firmly connected to the cutting head hub (26) by means of a joining material (46) introduced into the interspaces (58) between the elevated regions (50).

10. Cutting head as claimed in claim 9, **characterized in that** at least one elevated region (50) is formed continuously in the circumferential direction (38) and along the cutting head hub (26).

11. Cutting head as claimed in claim 9, **characterized in that** at least two elevated regions (50) are formed continuously in the circumferential direction (38) of the cutting head hub (26), an at least first elevated region (60) being arranged so as to be spaced apart in relation to an at least second elevated region (62) along the cutting head hub (26).

12. Cutting head as claimed in claim 9, **characterized in that** at least three elevated regions (50) are formed continuously in the circumferential direction (38) of the cutting head hub (26), at least one middle elevated region (61), arranged along the cutting head hub (26) between the at least first elevated region (60) and the last elevated region (62), having at least one region (63) of lower height.

13. Cutting head as claimed in claim 12, **characterized in that** the first elevated region (60) and the last elevated region (62) are preferably contiguous respectively to the workpiece-side end (65) and to the drive-side end (67) of the cutting head hub (26).

14. Cutting head as claimed in one of claims 9 to 13, **characterized in that** the elevated regions (50) are of ring-shaped design, and/or **in that** the elevated regions (50) are formed continuously along the cutting head hub (26), these elevated regions (50), in particular at least four webs (47) running along the cutting head hub (26), being spaced apart in the circumferential direction (38) of the cutting head hub (26) by interspaces (69).

15. Tool system for the cutting machining of a workpiece, with:
- a cylindrical holding shank (12) which has a cutting head fixture (16) on a workpiece-side end face (14) and a drive fixture (20) on a drive-side end face (18),
- a cutting head (22) as claimed in claim 9, and
- a tool coupling (28) with a tool interface (30) and with a coupling hub (32) matching with the drive fixture (20).

## Revendications

1. Couplage d'outil destiné à un système d'outil (10) pour l'usinage par enlèvement de copeaux d'une pièce, dans lequel le système d'outil (10) présente un arbre de maintien cylindrique (12), qui présente dans une face frontale côté entraînement (18) un logement d'entraînement (20) avec des faces de support (42), dans lequel le couplage d'outil (28) présente un moyeu de couplage (32) correspondant au logement d'entraînement (20),
**caractérisé en ce que** le moyeu de couplage (32) présente plusieurs zones d'élévation radialement saillantes (34), sur lesquelles il se trouve des faces d'appui (36) et entre lesquelles il se trouve des espaces intermédiaires (44), **en ce que** les zones d'élévation (34) sont disposées de façon répartie aussi bien en direction périphérique (38) que le long du moyeu de couplage (32), **en ce que** les faces d'appui (36) s'appliquent sur des faces de support (42) du logement d'entraînement (20) de l'arbre de maintien (12), et **en ce que** le logement d'entraînement (20) de l'arbre de maintien (12) est fermement assemblé au moyeu de couplage (32) du couplage d'outil (28) au moyen d'un matériau de jonction (46) introduit dans les espaces intermédiaires (44) entre les zones d'élévation (34).

2. Couplage d'outil selon la revendication 1, **caractérisé en ce qu'**au moins une des zones d'élévation (34) est continue en direction périphérique (38) et le long du moyeu de couplage (32).

3. Couplage d'outil selon la revendication 1 ou 2, **caractérisé en ce qu'**au moins deux zones d'élévation (34) sont continues dans la direction périphérique (38) du moyeu de couplage (32), dans lequel au moins la première zone d'élévation (35) est disposée à distance le long du moyeu de couplage (32) par rapport à au moins la dernière zone d'élévation (37).

4. Couplage d'outil selon l'une quelconque des revendications précédentes, **caractérisé en ce qu'**au moins trois zones d'élévation (34) sont continues dans la direction périphérique (38) du moyeu de couplage (32), dans lequel au moins une zone d'élévation moyenne (39), disposée le long du moyeu de couplage (32) entre la première zone d'élévation (35) et la dernière zone d'élévation (37), présente au moins une zone (41) de moindre hauteur.

5. Couplage d'outil selon l'une quelconque des revendications précédentes, **caractérisé en ce que** la première zone d'élévation (35) et la dernière zone d'élévation (37) se raccorde de préférence à l'extrémité côté pièce (43) et à l'extrémité côté entraînement (45) du moyeu de couplage (32).

6. Couplage d'outil selon l'une quelconque des revendications précédentes, **caractérisé en ce que** les zones d'élévation (34) sont réalisées sous forme annulaire.

7. Couplage d'outil selon l'une quelconque des revendications précédentes, **caractérisé en ce que** les zones d'élévation (34) sont continues le long du moyeu de couplage (32), dans lequel ces zones d'élévation (34), en particulier au moins quatre nervures (47) s'étendant le long du moyeu de couplage (32), sont espacées par des espaces intermédiaires (44) dans la direction périphérique (38) du moyeu de couplage (32).

8. Système d'outil pour l'usinage par enlèvement de copeaux d'une pièce, comprenant:
un arbre de maintien cylindrique (12), qui présente dans une face frontale côté pièce (14) un logement de tête de coupe (16) et dans une face frontale côté entraînement (18) un logement d'entraînement (20),
une tête de coupe (22) avec au moins un couteau (24) et un moyeu de tête de coupe (26) correspondant au logement de tête de coupe (16) de l'arbre de maintien (12), et
un couplage d'outil (28) selon la revendication 1.

9. Tête de coupe pour un système d'outil pour l'usinage par enlèvement de copeaux d'une pièce, dans laquelle le système d'outil (10) présente un arbre de maintien cylindrique (12), qui présente dans une face frontale côté pièce (14) un logement de tête de coupe (16) avec des faces de support (56), dans laquelle la tête de coupe (22) présente au moins un couteau (24), et dans laquelle la tête de coupe (22) présente un moyeu de tête de coupe (26) correspondant au logement de tête de coupe (16),
**caractérisée en ce que** le moyeu de tête de coupe présente plusieurs zones d'élévation radialement saillantes (50), sur lesquelles il se trouve des faces d'appui (52) et entre lesquelles il se trouve des espaces intermédiaires (58), **en ce que** les zones d'élévation (50) sont disposées de façon répartie aussi bien en direction périphérique (38) que le long du moyeu de tête de coupe (26), **en ce que** les faces d'appui (52) s'appliquent sur des faces de support (56) du logement de tête de coupe (16) de l'arbre de maintien (12), et **en ce que** le logement de tête de coupe (16) est fermement assemblé au moyeu de tête de coupe (26) au moyen d'un matériau de jonction (46) introduit dans les espaces intermédiaires (58) entre les zones d'élévation (50).

10. Tête de coupe selon la revendication 9, **caractérisée en ce qu'**au moins une des zones d'élévation (50) est continue en direction périphérique (38) et le long du moyeu de tête de coupe (26).

11. Tête de coupe selon la revendication 9, **caractérisée en ce qu'**au moins deux zones d'élévation (50) sont continues dans la direction périphérique (38) du moyeu de tête de coupe (26), dans laquelle au moins une première zone d'élévation (60) est disposée à distance le long du moyeu de tête de coupe (26) par rapport à au moins une deuxième zone d'élévation (62).

12. Tête de coupe selon la revendication 9, **caractérisée en ce qu'**au moins trois zones d'élévation (50) sont continues dans la direction périphérique (38) du moyeu de tête de coupe (26), dans laquelle au moins une zone d'élévation moyenne (61), disposée le long du moyeu de tête de coupe (26) entre au moins la première zone d'élévation (60) et la dernière zone d'élévation (62), présente au moins une zone (63) de moindre hauteur.

13. Tête de coupe selon la revendication 12, **caractérisée en ce que** la première zone d'élévation (60) et la dernière zone d'élévation (62) se raccorde de préférence à l'extrémité côté pièce (65) et à l'extrémité côté entraînement (67) du moyeu de tête de coupe (26).

14. Tête de coupe selon l'une quelconque des revendications 9 à 13, **caractérisée en ce que** les zones d'élévation (50) sont réalisées sous forme annulaire, et/ou **en ce que** les zones d'élévation (50) sont continues le long du moyeu de tête de coupe (26), dans laquelle ces zones d'élévation (50), en particulier au moins quatre nervures (47) s'étendant le long du moyeu de tête de coupe (26), sont espacées par des espaces intermédiaires (69) dans la direction périphérique (38) du moyeu de tête de coupe (26).

15. Système d'outil pour l'usinage par enlèvement de copeaux d'une pièce, comprenant:
un arbre de maintien cylindrique (12), qui présente dans une face frontale côté pièce (14) un logement de tête de coupe (16) et dans une face frontale côté entraînement (18) un logement d'entraînement (20),
une tête de coupe (22) selon la revendication 9, et
un couplage d'outil (28) avec une interface d'outil (30) et un moyeu de couplage (32) correspondant au logement d'entraînement (20).
